# EUROPEAN PATENT SPECIFICATION

(11) **EP 3 148 151 B1**
(45) Date of publication and mention of the grant of the patent: **31.03.2021**
(21) Application number: 15186446.9
(22) Date of filing: 23.09.2015
(51) Int. Cl.: H04L 29/12, H04W 88/08, H04L 29/08, H04L 29/06, H04L 12/851, H04W 28/24

(54) **METHOD, COMPUTER PROGRAM PRODUCT AND NETWORK SYSTEM FOR ESTABLISHING A DATA COMMUNICATION**
VERFAHREN, COMPUTERPROGRAMMPRODUKT UND NETZWERKSYSTEM ZUR BEREITSTELLUNG EINER DATENKOMMUNIKATION
METHODE, PROGRAMME INFORMATIQUE ET SYSTÈME DE RÉSEAU POUR ÉTABLISSEMENT D'UNE COMMUNICATION DE DONNÉES

(43) Date of publication of application: 29.03.2017
(73) Proprietor: Vodafone GmbH, 40549 Düsseldorf (DE)
(72) Inventor: Burmester, Nick, 60385 Frankfurt am Main (DE); Bindrim, Walter, 45721 Haltern am See (DE); Fernandes, António Carlos Correia, 40489 Düsseldorf (DE)
(74) Representative: Patentanwälte Bals & Vogel

(56) References cited:
- EP-A1- 2 914 048
- EP-A2- 1 843 530
- US-A1- 2009 170 475
- "3rd Generation Partnership Project; Technical Specification Group Services and System Aspects; 3GPP system to Wireless Local Area Network (WLAN) interworking; System description (Release 8)", 3GPP STANDARD; 3GPP TS 23.234, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2008 (2008-12-01), pages 1-85, XP050363357,
- "3rd Generation Partnership Project; Technical Specification Group Core Network and Terminals; 3GPP System to Wireless Local Area Network (WLAN) interworking; WLAN User Equipment (WLAN UE) to network protocols; Stage 3 (Release 12)", 3GPP STANDARD; 3GPP TS 24.234, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V12.2.0, 20 March 2015 (2015-03-20), pages 1-40, XP050927885, [retrieved on 2015-03-20]
- "3rd Generation Partnership Project; Technical Specification Group Services and System Aspects; Quality of Service (QoS) and policy aspects of 3GPP - Wireless Local Area Network (WLAN) interworking (Release 7)", 3GPP STANDARD; 3GPP TR 23.836, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 1 November 2005 (2005-11-01), pages 1-16, XP050363927,
- HUAWEI ET AL: "Multiple tunnels supporting in BBAI", 3GPP DRAFT; S2-111127 MULTIPLE IPSEC TUNNEL SUPPORTING IN BBAI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 26 February 2011 (2011-02-26), XP050524137, [retrieved on 2011-02-26]

## Description

The present invention is related to a method for establishing a data communication between a mobile entity (user equipment / mobile) and the internet via a WiFi access point (WIFI AP) with a public mobile network backhaul over a secure connection as well as a related computer program product and a respective network system.

It is generally known that according to data communications between mobile entities (UE) and the internet or network internal services also WiFi access points (WIFI AP) can be used. Such a Wi-Fi access point creates a WiFi network to communicate between the WiFi access point (WIFI AP) and the mobile entity (UE). To pass on data communication from the WiFi access point in usual situations a wired communication, for example a local area network, is provided to connect via DSL connection or the like, to the internet. Due to the fact that mobility becomes more and more important, also WiFi access points can be used, which are a mobile themselves. For example, mobile WiFi access points can be used in a car which themselves use public mobile network for backhauling. In the example of a car, the WiFi access point creates a WiFi network for wireless communication with the mobile entity (UEs) inside of the car, and to pass on the data communication, the WiFi access point comprises connectivity to a public mobile network to have a mobile network backhauling for the WiFi access point for communication with the internet or network internal services.

Prior art examples can be found in the patents publications EP1843530A2, EP2914048A1, US2009/170475A1 and the 3GPP specifications TS23.234, TS24.234 and S2-111127.

In the solutions on the market, the data communication is past on from the WiFi access point to the internet via the public mobile network backhaul. In case that two or more data communications requests are within the WIFI, the WIFI access point, will build queues to forward the communications to the public mobile backhaul according local quality of service rules of the WIFI access point. The transport on the public mobile backhaul will be carried out according best effort mode from public mobile network for normal data communication.

This has to be understood that different services are different data communications, which are handled all with best effort against each other on the public mobile backhaul, so they share the same resources/queue in equal shares. This has further to be understood that in a car with a WiFi access point, two or more mobile entities (UEs) can be starting data communications for one or more services. This has also to be understood, that the public mobile backhaul consists of mobile network which has also more than one mobile entities, which can be other mobile hotspots with mobile backhaul or other mobile entities as the User equipment which is not using WIFI for the access. All this mobile entities will share the same medium in a cell of the public mobile network (queue).

The first mobile entity starting the data communication will be queued up at the first position and therefore, even a time-uncrucial download of data will be handled in the public mobile network in the same way as a time critical communication like audio streams. If, for example, a second or a third mobile entity tries to establish a time-critical service, for example a voice over WiFi or a video streaming or an audio streaming service, he will be handled on second, third or even further position with the same shares in the queue of the public mobile network backhaul. Due to the fact that in particular mobile network backhauling is limited to the available bandwidth, a respective reduction in the bandwidth is noticeable at the mobile entity if the respective service is handled not with the highest priority. Therefore, it could happen that time-critical services on the mobile entity are not handled with the correct priority and therefore, the quality of service, which can be evaluated by the user of the mobile entity, is less or not acceptable.

It is an object of the present invention to overcome aforesaid problems. In particular, it is an object of the present invention to provide best quality of service evaluation also for time-critical services at the mobile entity, even for WiFi access points with a public mobile network backhauling.

Aforesaid object is achieved by a method according to independent claim 1, the computer program product according to independent claim 9 and a network system according to claim 11 of the present application. Further features and details of the invention result from the subclaims, the description and the figures. Features and details discussed with respect to the inventive method are also correlated with the inventive computer program product and the other way round.

A data communication shall be established between a mobile entity (UE) and the internet or network internal services via a WiFi access point (WIFI AP) with a public mobile network backhaul over a secure connection. To establish that data communication the following steps are carried out:
- sending a communication request from the mobile entity to the internet via the WiFi access point including a content information,
- establishing a secure communication between the mobile entity (UE) and the internet via the public mobile network backhaul,
- setting a priority for the secure communication tunnel based on the content information,
- start the data communication via the established and prioritized secure communication tunnel.

The data communication with the internet can in particular be established between the mobile entity and a network service point via the WiFi access point. A WiFi access point can in particular comprise a Wireless LAN Controller. Also a network of several single WiFi access point being combined by a Wireless LAN Controller can be understood as a WiFi access point within the present invention.

The data communication starts with a respective communication request coming from the mobile entity (UE). The communication request is only carrying a limited amount of content information. Based on this the resolution of the internet /network service endpoint via communication server (e.g DNS) could be used as identifier for content information's. The WiFi access point will use this trigger to start the establishment a new of a secure communication tunnel, for example a so-called IPsec tunnel, via the public mobile network backhaul. The mobile entity will start to establish a secure communication (e.g IPSec Tunnel) towards the internet/network service endpoint. Therefore, from the WiFi access point there will be no more information accessible due to the secure tunnel situation, what kind of content will be part of the data communication between mobile entity and the internet/service endpoint. To achieve a specification in particular as to the bandwidth accessible for the data communication, a priority is set for the secure communication tunnel based on the content information. Based on that the mobile access point maintain the communication channels via the public mobile backhaul, the priority can be set from the mobile entity as well as from the WiFi access point, a server of a controller of the WiFi access point. The setting of the priority can take place directly by the respective correlation of the content information (e.g the IPSec tunnel towards internet/network service endpoint) or by later on described correlation between respective routing of IP addresses or amended IP addresses.

The communication is started at the last step of the inventive method after the secure communication tunnel has been established in a prioritized way.

The secure communication tunnel is established for a secure data communication between the mobile entity and the internet. To set a priority for said secure communication tunnel, a prioritized channel can be established using/comprising said secure communication tunnel. Of course, this is only one possibility to set the priority according to the present invention.

The prioritization, for example, can use quality of service parameters. A quality of service so-called QoS is in particular considered as to time-critical services on the mobile entity like voice over WiFi, video streaming or audio streaming. In that case, the reduction of transfer rate of data below a significant value can be recognized immediately by the user of the mobile entity due to the lack of noise quality, audio quality or video quality. Same will happen due to packet loss or higher delay in the transport of the packets.

To set a respective priority, in dependence of the kind of service, different parameters for the priority can be used. For example, a video over WiFi connection can be set with the highest priority level, whereas an audio over WiFi connection could be set with a lower but still high priority level. A quality of service can be used for a class identifier to establish a so-called quality of service class identifier parameter. Such a so-called QCI parameter usually is handled for example between the levels 1 and 9 to offer a prioritization. In that case, a QCI parameter 1 is the highest level of priority, wherein the parameter for QCI of 9 is the lowest priority. The use of a QCI parameter is only one possibility to set the respective priority for the establishment of the secure communication tunnel. Of course a priority can also be set by more abstract ways, for example by providing the secure communication tunnel with an executable and/or comparable information to move up this specific secure communication tunnel in a communication queue. Such a priority can for example be configured to be a usage priority, a data priority, an entity priority and/or an emergency call priority.

Based on aforesaid description, it is now possible to configure the secure tunnel with a respective prioritization even there is no information's available what is transported within the secure tunnel by using the communication request to make a mapping between the secure tunnel and the prioritized channel on the public mobile network backhaul.

In that case, all the data communication, which is taking place for the whole time of the data communication, will now be prioritized by the respective specification of the secure communication tunnel. No matter if any of the further servers, the mobile network or any other parts of the networks has a visibility of the content which is handled within the secure communication tunnel, the prioritization is available for those parts of the network. Therefore, all data communication, in particular all data communication packets handled by that secure communication tunnels, will be queued up according to the selected and set priority of the public mobile network backhaul channel (PDN context).

If, for example, a respective priority is set to the highest priority, all data communication, which is handled by that secure communication tunnel, will be handled with the highest priority. Therefore, this is a very easy and less complex way to handle high prioritization even if a secure connection is in place.

Beside the prioritization within the queue of the WiFi access point, a further prioritization can take place, which is described in more detail in the following description.

It is possible that according to the method the priority is set for the secure communication tunnel as a standard priority for prioritizing also against further WiFi access points with the same mobile network backhaul. Such a situation, for example, can take place when two or more cars all are configured with own WiFi access points and are within the same mobile network cell for the backhauling situation. In that case, there is a competition going on between the WiFi access points and also only one single queue is built up for backhauling for two or more WiFi access points and the respective connected mobile entities within the cars. In such situation, the priority situation for the different secure communication tunnels built up by the different WiFi access points can now help to prioritize the respective queue within one single mobile network backhaul for even two or more WiFi access points. In such a situation, the possibility of the prioritization brings benefit not only to two or more different mobile entities within the reach of only one WiFi access point but also between the competition of two or more single WiFi access points within the same mobile network cell.

It is also possible that the method is characterized in that the content information comprises a fully qualified domain name. Beside the fact that content information can comprise specific information about what kind of service is to be used within the data communication, a fully qualified domain name, also called FQDN, can be used to select the specific information on the content to be transferred by the data communication. A respective resolution of the FQDN, for example, can be carried out within the mobile entity, the WiFi access point or even later on in the mobile network. Based on the FQDN, for example a so-called ePDG (evolved packet data gateway) can be assessed by the respective communication request. If FQDN comprises more information about the content or the service behind and, in particular, based on the selected address, the further on routing can be used to specify the respective priority for the secure communication tunnel. This is in particular true for the possible solutions discussed later on by resolving the FQDN with a specific and amended IP address.

It is possible that according to the description the method is characterized in that the WiFi access point is forwarding the communication request (DNS request) to a communication server (DNS Server) of the mobile network backhaul and receives the communication answer from the communication server comprising a prioritized IP address, which is used to set the priority for the secure communication tunnel. This is used, by answering the communication request (DNS request) in a different service endpoint (IP) than if the communication request would be send over a different connection than a public mobile backhaul. The prioritized endpoint (IP) is directly located within the public mobile network, instead of in the public internet domain. Based on this the mobile operator can implement prioritized routing towards the network service endpoint not only in the radio access.

This is a very easy solution. In particular, in this case no amendment has to be carried out at the mobile entity. The mobile entity can be used in the general way trying to establish the data communication by starting to send FQDN. Just by the respective knowledge of the communication server of the situation of the secure communication tunnel as well as the mobile network backhaul, it will change the resolution of the FQDN and sends back a communication server with a selected IP address, which is specific for that mobile backhaul situation. Such a possibility leads to a situation where the priority is set by the respective response from the communication server. One big advantage of the solution is that no change of the mobile entity is needed anymore. In particular, a respective ePDG, serving as a service endpoint, is reached directly within the mobile network of the backhauling system and not anymore via the internet.

A further possibility is, that the mobile entity recognizes the WiFi access point including the mobile network backhaul and sets a profile for the data communication, in particular the profile comprising a correlation between different content information (DNS requests) and different priorities. In this case, the mobile entity starts from the very beginning of the inventive method to comprise information about the mobile network backhaul situation. This recognition can be carried out manually or automatically. For example, the user of the mobile entity can recognize his situation inside of a car using a WiFi access point with the mobile network backhauling situation. Of course, it is also possible, for example by the recognition of the SSID name of the WiFi access point to recognize the situation of a mobile network backhauling automatically within the mobile entity. In all situations, nevertheless if it is carried out manually or automatically, the profile for the data communication can comprise the content information (DNS request) and therefore already the respective priority information. Therefore, the communication profile can be used directly to set the prioritization for the communication channel (PDN Context) to be established on the public mobile network backhaul. In particular, a respective resolution of a FQDN, which has been described above, can be referred and routed to a different IP address starting from the mobile entity already from the beginning of the inventive method. This can also be understood as direct choice of a different IP address depending on the chosen data and communication profile.

It is further possible that the content information comprises a fully qualified domain name FQDN, which is resolved within the WiFi access point such that the data communication is routed to a different IP address from the WiFi access point. This can also be called masquerading (DNS masquerading) or manipulation of the data communication request within the WiFi access point. In particular, the WiFi access point is used as a masqueraded DNS server and therefore a re-routing is carried out within the WiFi access point. One big advantage of this solution is that once more no amendment or change has to be carried out at the mobile entity. The WiFi access point has itself the knowledge of the mobile backhaul situation as well as the secure communication tunnel and therefore can carry out the respective masquerading step of resolving the FQDN to a respective different and specific IP address of the service endpoint for the mobile backhaul situation.

It is further possible that the mobile entity and/or the WiFi access point comprises a list correlating different content information with different priorities, in particular with different fully qualified domain names FQDN. Such a list, for example, can comprise a situation where the respective content information, in particular the respective service to be used, is correlated with the respective priority. For example, if a voice over WiFi service is selected such content information is correlated with a high priority level, for example, a high QCI parameter or a respective fully qualified domain name FQDN. If a low data download is selected as service a respective low priority is correlated within that list and the respective secure communication tunnel is established with a correlated low priority communication channel on the public mobile network channel. In that case, the complexity of the method is significantly reduced. However, the respective list has to be kept updated within the WiFi access point and/or within the mobile entity.

It is further possible that the WiFi access point separates a data communication into two or more different communication tunnels, in particular with different priorities, based on the content information. If, for example, a voice over WiFi service is to be used as a data communication, different data communication will take place. For example, a signaling data will be exchanged during the data communication of the voice of WiFi service beside the specific name communication including the voice information. In such a situation, it is now possible to separate the data communication, for example, in two different communication tunnels. One communication tunnel can be used with a small bandwidth for the signaling communication for the voice over WiFi service which is always connected. The main bandwidth is placed in a second communication tunnel being there for the voice transfer of the respective data communication. In such a situation, the broad bandwidth is only used if their signaling part of the communication to a separate tunnel gives the mobile entity and/or the WiFi access point respective information that a voice over WiFi service is not actively used. The signaling step and the respective data communication is kept with a low bandwidth because it is not time-crucial and therefore the respective QCI parameter and/or the respective priority set for that second communication tunnel can be used at a lower value.

A further possibility can be achieved if the method is characterized in that the WiFi access point manages the bandwidth of the mobile network backhaul or for at least two data communications. For example, the WiFi access point can be configured to receive data communications from different mobile entities within its reach. Also, two or more data communications coming from one and the same mobile entity can be handled by a WiFi access point. Beside the management of the number of the data communication, it is also possible that the method and the WiFi access point will manage the content and therefore the specific services of the data communication. Therefore, an improved management of the bandwidth available from the mobile network backhaul can be achieved by that kind of management.

A further aspect is to offer a computer program product being stored on a computer readable medium establishing a data communication between a mobile entity and the internet via a WiFi access point with a mobile network backhaul over a secure connection, comprising the following:
- computer readable program means, initiating the computer to send a communication request from the mobile entity to the WiFi access point including a content information,
- The WiFi access point can use the content information (DNS request) to establish a communication channel (PDP context) on the public mobile network backhaul with small bandwidth requirements and a middle prioritization (QCI 5) for Signaling (e.g. SIP).
- computer readable program means, initiating the computer to establish a secure communication tunnel between the mobile entity and the internet via the public mobile network backhaul. It is possible that via this secure communication, the mobile entity is able to receive or to send requests for data communication.
- computer readable program means, initiating the computer to set a priority for the secure communication tunnel based on the content information,
- computer readable program means, initiating the computer to start the data communication via the established and prioritized secure communication tunnel.
- It is possible that the computer will start a second communication request (DNS request) to a different endpoint (IP) or modified endpoint (Port) of the same service endpoint, if it receives a request for data communication via the first secure tunnel, or it wants to initiate data communication which will be announce via the first secure channel.
- It is further possible that the WiFi access point used the content information (DNS request) to establish a second communication channel (bearer) within the first communication channel (PDP context) on the public mobile network backhaul with a defined bandwidth which is needed for the data communication and a high prioritization (QCI 1) for e.g. Voice communication (e.g. RTP).

An computer program product can comprise computer readable program means initiating the computer to carry out an claimed method.

Therefore, the computer program product comes up with the same possibilities and advantages, which have been discussed in detail with respect to the claimed method.

A network system is provided comprising a WiFi access point being configured to receive a communication request from the mobile entity to the internet the WiFi access point including a content information and to establish a secure communication tunnel between the mobile entity and the internet via the public mobile network backhaul, whereby a priority for the secure communication tunnel based on the content information is set and the data communication via the established and prioritized secure communication tunnel is started. Such a network system comes up with the same possibilities and advantages, which have been discussed in detail with respect to the claimed method,

The present invention is discussed in more detail with respect to the accompanying drawings, which show schematically:
- Fig. 1: a first step of an inventive method,
- Fig. 2: a further step of the inventive method after establishment of a secure communication tunnel,
- Fig. 3: a situation with two competing WiFi access points and
- Fig. 4: a situation with a communication answer.

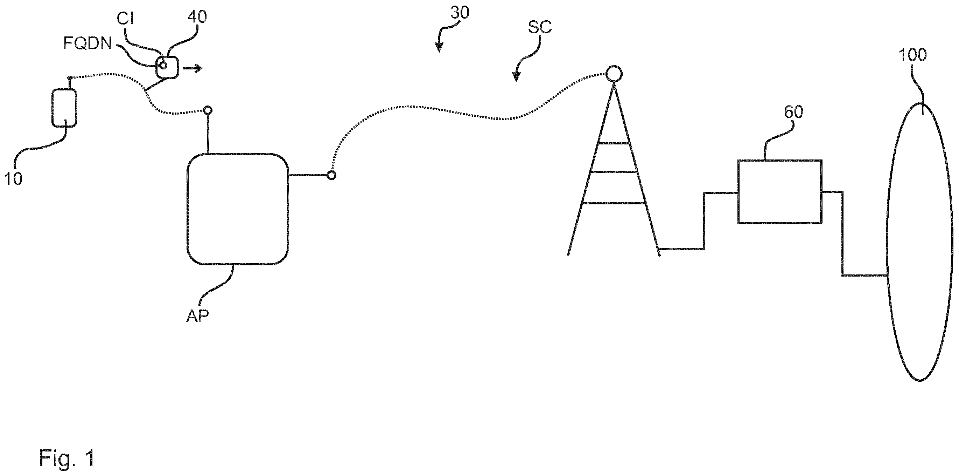

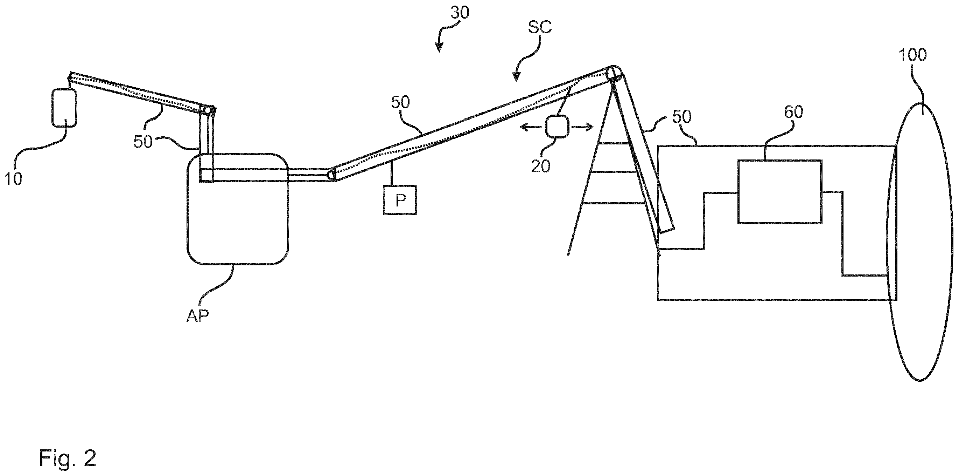

According to figs. 1 and 2 the inventive method is described in more detail. A WiFi access point AP, for example, can be located within the car and therefore offering a WiFi connectivity to a mobile entity 10. In that situation, the mobile entity wants to establish a data communication 20 over the WiFi access point AP and therefore sends a communication request 40. That communication request 40 comprises content information Cl, in particular a fully qualified domain name FQDN. This information is used, for example, within the WiFi access point AP to pass on and establish a respective secure communication tunnel 50 over a secure connection SC of a mobile network backhaul 30 from the mobile entity 10 to the internet 100. The further information and data communication 20 is then passed on over a communication server 60 to the internet or network internal services 100. As it can be seen in fig. 2, the secure communication tunnel 50 for the data communication 20 is established comprising a priority P. This priority P is correlated with the content information Cl, for example the FQDN or a respective IP address resolved from the WiFi access point AP or the communication server 60.

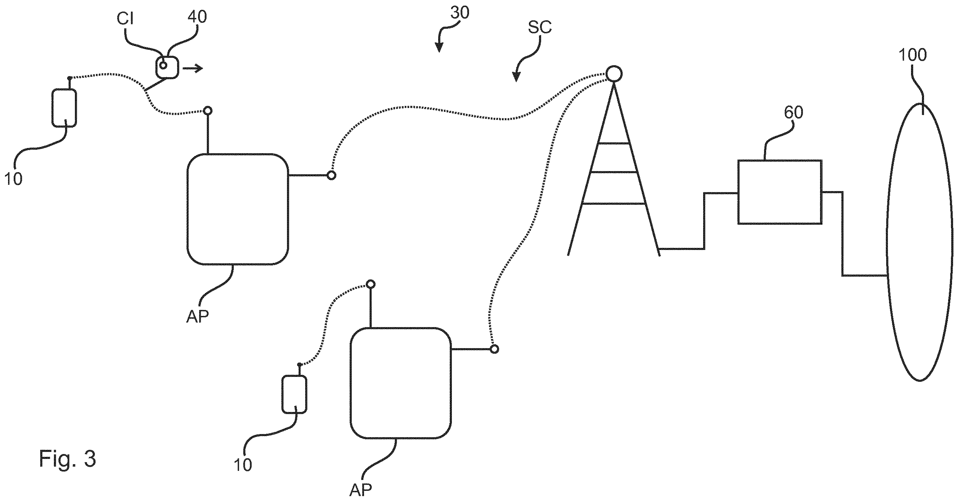

Fig. 3 shows the situation with two or more WiFi access points AP. The mobile network backhaul 30 is coming from the same antenna to both of the WiFi access points AP, both are connected to respective mobile entities 10. It is clear that now the both WiFi access points AP are competing against each other as to bandwidth in the mobile network backhaul 30. Due to the fact that the upper left mobile entity 10 now sends the communication request 40 together with a content information Cl, the respective secure communication tunnel 50 can be established in the same manner as it has been discussed to fig. 2. Therefore, the upper left WiFi access point AP now has a higher prioritized data communication possibility to the internet or network internal services 100 in the competition with the lower right WiFi access point AP. In particular, two or more different queues are established with the respective different secure communication tunnels 50.

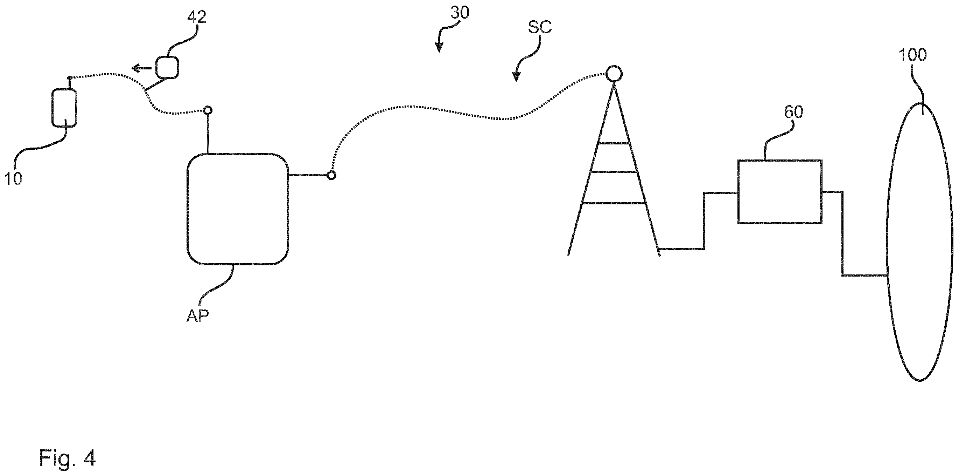

In fig. 4, it is shown schematically that upon a respective communication request 40, from the WiFi access point AP in a masquerading situation and/or from the communication server 60 a communication answer 42 can be sent with a resolution of the respective FQDN to a different IP address, which is specific to the mobile network backhaul situation.

Of course, aforesaid description of the accompanying drawings is only by the way of detail and example. Specific features of each aspect of the present claimed invention and the figures can be combined with each other if of technical sense.

### REFERENCE SIGNS

- 10: mobile entity
- 20: data communication
- 30: mobile network backhaul
- 40: communication request
- 42: communication answer
- 50: secure communication tunnel
- 60: communication server

- 100: internet or services with are offered within the provider network

- P: priority
- AP: WiFi access point
- SC: secure connection
- Cl: content information
- FQDN: fully qualified domain name

## Claims

1. Method for establishing a data communication (20) between a mobile entity (10) and the internet or network internal services (100) via a WiFi access point (AP) with a public mobile network backhaul (30) over a secure connection (SC), comprising the following steps:
- Sending a communication request (40) from the mobile entity (10) to the internet or network internal services (100) via the WiFi access point (AP) including a content information (CI), wherein the content information comprises specific information about what kind of service is to be used within the data communication,
- Establishing a secure communication tunnel (50) between the mobile entity (10) and the internet endpoint or network internal services endpoint (100) via the public mobile network backhaul (30),
- Setting a priority (P) for the secure communication tunnel (50) based on the content information (CI),
- Start the data communication (20) via the established and prioritized secure communication tunnel (50),
wherein the WiFi access point (AP) is forwarding the communication request (40) to a communication server (60) of the mobile network backhaul (30) ,
**characterized in that** the WiFi access point (AP)
receives a communication answer (42) from the communication server (60) comprising a prioritized IP address which is used to set the priority (P) for the secure communication tunnel (50).

2. Method according to claim 1, **characterized in that** the priority (P) is set for the secure communication tunnel (50) as a standard priority (P) for prioritizing also against further WiFi access points (AP) with the same mobile network backhaul (30).

3. Method according to any of the preceding claims, **characterized in that** the content information (CI) comprises a fully qualified domain name (FQDN).

4. Method according to any of the preceding claims, **characterized in that** the WiFi access point (AP) separates the data communication (20) into two or more different communication tunnels (50) with different priorities (P), based on the content information (CI).

5. Method according to any of the preceding claims, **characterized in that** the mobile entity (10) recognizes the WiFi access point (AP) including the mobile network backhaul (30) and sets a profile for the data communication (20), in particular the profile comprising a correlation between different content information (CI) and different priorities (P).

6. Method according to any of the preceding claims, **characterized in that** the content information (CI) comprises a fully qualified domain name (FQDN) which is resolved within the WiFi access point (AP) such that the data communication (20) is routed to a different IP address from the WiFi access point (AP).

7. Method according to any of the preceding claims, **characterized in that** the mobile entity (10) and/or the WiFi access point (AP) comprises a list correlating different content information (CI) with different priorities (P), in particular with different fully qualified domain names (FQDN).

8. Method according to any of the preceding claims, **characterized in that** the WiFi access point (AP) manages the bandwidth of the mobile network backhaul (30) for at least two data communications (20).

9. Computer program product being stored on a computer readable medium establishing a data communication (20) between a mobile entity (10) and the internet (100) via a WiFi access point (AP) with a public mobile network backhaul (30) over a secure connection (SC), comprising the following:
- Computer readable program means, initiating the computer to send a communication request (40) from the mobile entity (10) to the internet or network internal services (100) via the WiFi access point (AP) including a content information (CI), wherein the content information comprises specific information about what kind of service is to be used within the data communication,
- Computer readable program means, initiating the computer to establish a secure communication tunnel (50) between the mobile entity (10) and the internet endpoint or network internal services endpoint (100) via the public mobile network backhaul (30),
- Computer readable program means, initiating the computer to set a priority (P) for the secure communication tunnel (50) based on the content information (CI),
- Computer readable program means, initiating the computer to start the data communication (20) via the established and prioritized secure communication tunnel (50),
- Computer readable program means, initiating the computer to forward the communication request (40) from the WiFi access point (AP) to a communication server (60) of the mobile network backhaul (30),
**characterized by**
- Computer readable program means, initiating the computer to receive a communication answer (42) from the communication server (60) comprising a prioritized IP address and for using the prioritized IP address to set the priority (P) for the secure communication tunnel (50).

10. Computer program product according to claim 9, **characterized in** computer readable program means, initiating the computer to carry out a method with the features of claims 2 to 8.

11. Network system comprising a WiFi access point (AP) being configured to receive a communication request (40) from the mobile entity (10) to the internet or network internal services (100) via the WiFi access point (AP) including a content information (CI), wherein the content information comprises specific information about what kind of service is to be used within the data communication, and to establish a secure communication tunnel (50) between the mobile entity (10) and the internet endpoint or network internal services endpoint (100) via the public mobile network backhaul (30), whereby a priority (P) for the secure communication tunnel (50) based on the content information (CI) is set and the data communication (20) via the established and prioritized secure communication tunnel (50) is started, wherein the WiFi access point (AP) is configured to forward the communication request (40) to a communication server (60) of the mobile network backhaul (30), **characterized in that** the WiFi access point (AP) is configured to receive a communication answer (42) from the communication server (60) comprising a prioritized IP address and for using the prioritized IP address to set the priority (P) for the secure communication tunnel (50).

## Patentansprüche

1. Verfahren zum Aufbau einer Datenkommunikation (20) zwischen einer mobilen Einheit (10) und dem Internet oder netzinternen Diensten (100) über einen WiFi-Zugangspunkt (AP) mit einem öffentlichen Mobilnetz-Backhaul (30) über eine gesicherte Verbindung (SC), umfassend die folgenden Schritte:
- Senden einer Kommunikationsanfrage (40) von der mobilen Einheit (10) an das Internet oder die netzinternen Dienste (100) über den WiFi-Zugangspunkt (AP) einschließlich einer Inhaltsinformation (CI), wobei die Inhaltsinformation spezifische Informationen darüber umfasst, welche Art von Dienst innerhalb der Datenkommunikation verwendet werden soll,
- Aufbauen eines sicheren Kommunikationstunnels (50) zwischen der mobilen Einheit (10) und dem Internet-Endpunkt oder dem Endpunkt für netzinterne Dienste (100) über den öffentlichen Mobilnetz-Backhaul (30),
- Einstellen einer Priorität (P) für den sicheren Kommunikationstunnel (50) basierend auf der Inhaltsinformation (CI),
- Starten der Datenkommunikation (20) über den aufgebauten und priorisierten sicheren Kommunikationstunnel (50),
wobei
der WiFi-Zugangspunkt (AP) die Kommunikationsanfrage (40) an einen Kommunikationsserver (60) des Mobilnetz-Backhauls (30) weiterleitet, **dadurch gekennzeichnet, dass** der WiFi-Zugangspunkt (AP) eine Kommunikationsantwort (42) von dem Kommunikationsserver (60) empfängt, die eine priorisierte IP-Adresse umfasst, die verwendet wird, um die Priorität (P) für den sicheren Kommunikationstunnel (50) einzustellen.

2. Verfahren nach Anspruch 1, **dadurch gekennzeichnet, dass** die Priorität (P) für den sicheren Kommunikationstunnel (50) als Standardpriorität (P) zur Priorisierung auch gegenüber weiteren WiFi-Zugangspunkten (AP) mit demselben Mobilnetz-Backhaul (30) eingestellt wird.

3. Verfahren nach einem der vorhergehenden Ansprüche, **dadurch gekennzeichnet, dass** die Inhaltsinformation (CI) einen voll qualifizierten Domainnamen (FQDN) umfasst.

4. Verfahren nach einem der vorhergehenden Ansprüche, **dadurch gekennzeichnet, dass** der WiFi-Zugangspunkt (AP) die Datenkommunikation (20) in zwei oder mehr unterschiedliche Kommunikationstunnel (50) mit unterschiedlichen Prioritäten (P) aufteilt, basierend auf der Inhaltsinformation (CI).

5. Verfahren nach einem der vorhergehenden Ansprüche, **dadurch gekennzeichnet, dass** die mobile Einheit (10) den WiFi-Zugangspunkt (AP) einschließlich des Mobilnetz-Backhauls (30) erkennt und ein Profil für die Datenkommunikation (20) einstellt, wobei das Profil insbesondere eine Korrelation zwischen verschiedenen Inhaltsinformationen (CI) und verschiedenen Prioritäten (P) umfasst.

6. Verfahren nach einem der vorhergehenden Ansprüche, **dadurch gekennzeichnet, dass** die Inhaltsinformation (CI) einen voll qualifizierten Domainnamen (FQDN) umfasst, der innerhalb des WiFi-Zugangspunkts (AP) aufgelöst wird, sodass die Datenkommunikation (20) zu einer unterschiedlichen IP-Adresse als der des WiFi-Zugangspunkts (AP) geleitet wird.

7. Verfahren nach einem der vorhergehenden Ansprüche, **dadurch gekennzeichnet, dass** die mobile Einheit (10) und/oder der WiFi-Zugangspunkt (AP) eine Liste umfassen, die verschiedene Inhaltsinformationen (CI) mit verschiedenen Prioritäten (P), insbesondere mit verschiedenen voll qualifizierten Domainnamen (FQDN), korreliert.

8. Verfahren nach einem der vorhergehenden Ansprüche, **dadurch gekennzeichnet, dass** der WiFi-Zugangspunkt (AP) die Bandbreite des Mobilnetz-Backhauls (30) für mindestens zwei Datenkommunikationen (20) verwaltet.

9. Computerprogrammprodukt, das auf einem computerlesbaren Medium gespeichert ist, das eine Datenkommunikation (20) zwischen einer mobilen Einheit (10) und dem Internet (100) über einen WiFi-Zugangspunkt (AP) mit einem öffentlichen Mobilnetz-Backhaul (30) über eine sichere Verbindung (SC) aufbaut, umfassend Folgendes:
- Computerlesbare Programmmittel, die den Computer veranlassen, eine Kommunikationsanfrage (40) von der mobilen Einheit (10) an das Internet oder netzinterne Dienste (100) über den WiFi-Zugangspunkt (AP) zu senden, die eine Inhaltsinformation (CI) umfasst, wobei die Inhaltsinformation spezifische Informationen darüber umfasst, welche Art von Dienst innerhalb der Datenkommunikation verwendet werden soll,
- Computerlesbare Programmmittel, die den Computer veranlassen, einen sicheren Kommunikationstunnel (50) zwischen der mobilen Einheit (10) und dem Internet-Endpunkt oder dem Endpunkt für netzinterne Dienste (100) über den öffentlichen Mobilnetz-Backhaul (30) aufzubauen,
- Computerlesbare Programmmittel, die den Computer veranlassen, eine Priorität (P) für den sicheren Kommunikationstunnel (50) basierend auf der Inhaltsinformation (CI) einzustellen,
- Computerlesbare Programmmittel, die den Computer veranlassen, die Datenkommunikation (20) über den aufgebauten und priorisierten sicheren Kommunikationstunnel (50) zu starten,
- Computerlesbare Programmmittel, die den Computer veranlassen, die Kommunikationsanfrage (40) vom WiFi-Zugangspunkt (AP) an einen Kommunikationsserver (60) des Mobilnetz-Backhauls (30) weiterzuleiten, **gekennzeichnet durch**
- Computerlesbare Programmmittel, die den Computer veranlassen, eine Kommunikationsantwort (42) von dem Kommunikationsserver (60) zu empfangen, die eine priorisierte IP-Adresse umfasst, und die priorisierte IP-Adresse zu verwenden, um die Priorität (P) für den sicheren Kommunikationstunnel (50) einzustellen.

10. Computerprogrammprodukt nach Anspruch 9, **gekennzeichnet durch** computerlesbare Programmmittel, die den Computer veranlassen, ein Verfahren mit den Merkmalen der Ansprüche 2 bis 8 auszuführen.

11. Netzwerksystem, das einen WiFi-Zugangspunkt (AP) umfasst, der so konfiguriert ist, dass er eine Kommunikationsanfrage (40) von der mobilen Einheit (10) zum Internet oder zu netzinternen Diensten (100) über den WiFi-Zugangspunkt (AP) empfängt, die eine Inhaltsinformation (CI) umfasst, wobei die Inhaltsinformation spezifische Informationen darüber umfasst, welche Art von Dienst innerhalb der Datenkommunikation verwendet werden soll, und dass er einen sicheren Kommunikationstunnel (50) zwischen der mobilen Einheit (10) und dem Internet-Endpunkt oder Endpunkt des netzinternen Dienst (100) über den öffentlichen Mobilnetz-Backhaul (30) aufbaut, wobei eine Priorität (P) für den sicheren Kommunikationstunnel (50) basierend auf der Inhaltsinformation (CI) eingestellt wird und die Datenkommunikation (20) über den aufgebauten und priorisierten sicheren Kommunikationstunnel (50) gestartet wird, wobei der WiFi-Zugangspunkt (AP) konfiguriert ist, um die Kommunikationsanfrage (40) an einen Kommunikationsserver (60) des Mobilnetz-Backhauls (30) weiterzuleiten **dadurch gekennzeichnet, dass** der WiFi-Zugangspunkt (AP) konfiguriert ist, um eine Kommunikationsantwort (42) von dem Kommunikationsserver (60) zu empfangen, die eine priorisierte IP-Adresse umfasst, und um die priorisierte IP-Adresse zu verwenden, um die Priorität (P) für den sicheren Kommunikationstunnel (50) einzustellen.

## Revendications

1. Méthode pour établir une communication de données (20) entre une entité mobile (10) et l'internet ou les services internes du réseau (100) via un point d'accès WiFi (AP) avec un réseau mobile public de liaison (30) sur une connexion sécurisée (SC), comprenant les étapes suivantes :
- envoyer une demande de communication (40) de l'entité mobile (10) à l'internet ou aux services internes du réseau (100) via le point d'accès WiFi (AP) comprenant une information de contenu (Cl), dans laquelle l'information de contenu comprend des informations spécifiques sur le type de service qui doit être utilisé dans la communication de données,
- établir un tunnel de communication sécurisé (50) entre l'entité mobile (10) et le point d'extrémité de l'internet ou le point d'extrémité des services internes du réseau (100) via le réseau mobile public de liaison (30),
- fixer une priorité (P) pour le tunnel de communication sécurisé (50) sur la base de l'information de contenu (IC),
- démarrer la communication des données (20) via le tunnel de communication sécurisé établi et prioritaire (50),
où
le point d'accès WiFi (AP) transmet la demande de communication (40) à un serveur de communication (60) du réseau mobile de liaison (30), **caractérisé en ce que** le point d'accès WiFi (AP) reçoit une réponse de communication (42) du serveur de communication (60) comprenant une adresse IP prioritaire qui est utilisée pour fixer la priorité (P) pour le tunnel de communication sécurisé (50).

2. Méthode selon la revendication 1, **caractérisée en ce que** la priorité (P) est fixée pour le tunnel de communication sécurisé (50) en tant que priorité standard (P) pour la priorisation également par rapport à d'autres points d'accès WiFi (AP) avec le même réseau mobile de liaison (30).

3. Méthode selon l'une des revendications précédentes, **caractérisée en ce que** l'information de contenu (IC) comprend un nom de domaine pleinement qualifié (FQDN).

4. Méthode selon l'une des revendications précédentes, **caractérisée en ce que** le point d'accès WiFi (AP) sépare la communication de données (20) en deux ou plusieurs tunnels de communication différents (50) avec des priorités différentes (P), sur la base de l'information de contenu (Cl).

5. Méthode selon l'une des revendications précédentes, **caractérisée en ce que** l'entité mobile (10) reconnaît le point d'accès WiFi (AP) y compris le réseau mobile de liaison (30) et établit un profil pour la communication de données (20), en particulier le profil comprenant une corrélation entre différentes informations de contenu (Cl) et différentes priorités (P).

6. Méthode selon l'une des revendications précédentes, **caractérisée en ce que** l'information de contenu (Cl) comprend un nom de domaine pleinement qualifié (FQDN) qui est résolu au sein du point d'accès WiFi (AP) de telle sorte que la communication de données (20) est acheminée vers une adresse IP différente de celle du point d'accès WiFi (AP).

7. Méthode selon l'une des revendications précédentes, **caractérisée en ce que** l'entité mobile (10) et/ou le point d'accès WiFi (AP) comprend une liste corrélant différentes informations de contenu (Cl) avec différentes priorités (P), en particulier avec différents noms de domaine pleinement qualifiés (FQDN).

8. Méthode selon l'une des revendications précédentes, **caractérisée en ce que** le point d'accès WiFi (AP) gère la largeur de bande du réseau mobile de liaison (30) pour au moins deux communications de données (20).

9. Produit de programme informatique stocké sur un support lisible par ordinateur établissant une communication de données (20) entre une entité mobile (10) et l'internet (100) via un point d'accès WiFi (AP) avec un réseau mobile public de liaison (30) sur une connexion sécurisée (SC), comprenant :
- Moyen de programme lisible par ordinateur, initiant l'ordinateur à envoyer une demande de communication (40) de l'entité mobile (10) à l'internet ou aux services internes du réseau (100) via le point d'accès WiFi (AP) comprenant une information de contenu (Cl), dans lequel l'information de contenu comprend des informations spécifiques sur le type de service qui doit être utilisé dans la communication de données,
- Moyen de programme lisible par ordinateur, initiant l'ordinateur à établir un tunnel de communication sécurisé (50) entre l'entité mobile (10) et le point d'extrémité de l'internet ou le point d'extrémité des services internes du réseau (100) via le réseau mobile public de liaison (30),
- Moyen de programme lisible par ordinateur, initiant l'ordinateur à fixer une priorité (P) pour le tunnel de communication sécurisé (50) sur la base de l'information de contenu (lC),
- Moyen de programme lisible par ordinateur, initiant l'ordinateur à démarrer la communication de données (20) via le tunnel de communication sécurisé établi et prioritaire (50),
- Moyen de programme lisible par ordinateur, initiant l'ordinateur à transmettre la demande de communication (40) du point d'accès WiFi (AP) à un serveur de communication (60) du réseau mobile de liaison (30), **caractérisé par**
- Moyen de programme lisible par ordinateur, initiant l'ordinateur à recevoir une réponse de communication (42) du serveur de communication (60) comprenant une adresse IP prioritaire et pour utiliser l'adresse IP prioritaire afin de fixer la priorité (P) pour le tunnel de communication sécurisé (50).

10. Produit de programme informatique selon la revendication 9, **caractérisé par de** moyen de programme lisible par ordinateur, initiant l'ordinateur à exécuter une méthode présentant les caractéristiques des revendications 2 à 8.

11. Système de réseau comprenant un point d'accès WiFi (AP) configuré pour recevoir une demande de communication (40) de l'entité mobile (10) vers l'internet ou les services internes du réseau (100) via le point d'accès WiFi (AP) comprenant une information de contenu (Cl), dans lequel l'information de contenu comprend des informations spécifiques sur le type de service qui doit être utilisé dans la communication de données, et pour établir un tunnel de communication sécurisé (50) entre l'entité mobile (10) et le point d'extrémité de l'internet ou le point d'extrémité des services internes du réseau (100) via réseau mobile public de liaison (30), dans lequel une priorité (P) pour le tunnel de communication sécurisé (50) basée sur l'information de contenu (Cl) est fixée et la communication de données (20) via le tunnel de communication sécurisé (50) établi et priorisé est démarrée, dans lequel le point d'accès WiFi (AP) est configuré pour transmettre la demande de communication (40) à un serveur de communication (60) du réseau mobile de liaison (30), **caractérisé en ce que** le point d'accès WiFi (AP) est configuré pour recevoir une réponse de communication (42) du serveur de communication (60) comprenant une adresse IP prioritaire et pour utiliser l'adresse IP prioritaire afin de fixer la priorité (P) pour le tunnel de communication sécurisé (50).
